(19) **Europäisches Patentamt / European Patent Office / Office européen des brevets**

(11) **EP 4 694 135 A2**

(12) **EUROPEAN PATENT APPLICATION**
published in accordance with Art. 153(4) EPC

(43) Date of publication:
**11.02.2026 Bulletin 2026/07**

(21) Application number: 24785230.4

(22) Date of filing: 03.04.2024

(51) International Patent Classification (IPC):
**H04N 19/593** (2014.01)   **H04N 19/11** (2014.01)
**H04N 19/176** (2014.01)

(52) Cooperative Patent Classification (CPC):
**H04N 19/11; H04N 19/176; H04N 19/593**

(86) International application number:
**PCT/KR2024/004360**

(87) International publication number:
**WO 2024/210529 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.04.2023 KR 20230044108**

(71) Applicant: **LG Electronics Inc.
Yeongdeungpo-gu
Seoul 07336 (KR)**

(72) Inventors:
- **CHOI, Jangwon**
  **Seoul 06772 (KR)**
- **YOO, Sunmi**
  **Seoul 06772 (KR)**
- **HONG, Myungoh**
  **Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **INTRA PREDICTION-BASED IMAGE ENCODING/DECODING METHOD AND DEVICE, AND RECORDING MEDIUM FOR STORING BITSTREAM**

(57)    Provided are an image encoding/decoding method and device. The image decoding method, according to the present disclosure, comprises the steps of: on the basis of intra prediction information of neighboring blocks of the current block, acquiring one or more candidate intra prediction information; on the basis of the one or more candidate intra prediction information, configuring an intra prediction candidate list; acquiring an intra prediction candidate index representing one candidate intra prediction information included in the intra prediction candidate list; and generating a prediction block of the current block by performing intra prediction on the basis of the candidate intra prediction information indicated by the intra prediction candidate index, wherein the candidate intra prediction information may include at least one among template based intra mode derivation (TIMD) information, decoder side intra mode derivation (DIMD) information or linear model information, linear interpolation intra prediction (LIP) information, position dependent intra prediction (PDPC) information, multi reference line (MRL) information, template-based multiple reference line (TMRL) information, intra sub-partition (ISP) information, matrix-based intra prediction (MIP) information, interpolation filter information, mode dependent intra smoothing (MDIS) information, combined inter and intra prediction (CIIP) information, spatial geometric partition mode (SGPM) information, template matching intra prediction (intraTMP) information, intra prediction directional mode information, extended planar information, intra prediction fusion information, neighboring reference sample characteristics information or intra block copy (IBC) information.

EP 4 694 135 A2

FIG. 16

Start

S1610

Obtain at least one candidate intra prediction information based on intra prediction information of neighboring blocks of current block

S1630

Construct intra prediction candidate list

S1650

Obtain intra prediction candidate index

S1670

Generate prediction block of current block

End

**Description**

[Technical Field]

The present disclosure relates to an image encoding/decoding method and apparatus, and a recording medium for storing a bitstream, and more specifically, relates to an image encoding/decoding method and apparatus based on intra prediction, and a recording medium for storing a bitstream generated by the image encoding method/apparatus of the present disclosure.

[Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.

Accordingly, a high-efficiency image compression technology is required to effectively transmit, store, and reproduce the information of high-resolution and high-quality images.

[Disclosure]

[Technical Problem]

The present disclosure is to provide an image encoding/decoding method and apparatus with improved encoding/decoding efficiency.

In addition, the present disclosure is to provide an image encoding/decoding method and apparatus for effectively performing intra prediction.

In addition, the present disclosure is to provide an image encoding/decoding method and apparatus for effectively generating an intra prediction candidate list.

In addition, the present disclosure is to provide an image encoding/decoding method and apparatus for including various prediction modes when generating an intra prediction candidate list.

In addition, the present disclosure is to provide a non-transitory computer-readable recording medium for storing a bitstream generated by the image encoding method or apparatus according to the present disclosure.

In addition, the present disclosure is to provide a non-transitory computer-readable recording medium for storing a bitstream which is received and decoded by the image decoding apparatus according to the present disclosure and used for image reconstruction.

In addition, the present disclosure is to provide a method for transmitting a bitstream which is generated by the image encoding method or apparatus according to the present disclosure.

The technical problems to be achieved in the present disclosure are not limited to the technical problems described above, and other technical problems not described may be clearly understood by those of ordinary skill in the art from the following descriptions.

[Technical Solution]

According to an embodiment of the present disclosure, as an image decoding method performed by an image decoding apparatus, it includes obtaining at least one candidate intra prediction information based on intra prediction information of neighboring blocks of a current block, constructing an intra prediction candidate list based on the at least one candidate intra prediction information, obtaining an intra prediction candidate index representing one candidate intra prediction information included in the intra prediction candidate list and generating a prediction block of the current block by performing intra prediction based on the candidate intra prediction information indicated by the intra prediction candidate index, wherein the candidate intra prediction information may include at least one of template based intra mode derivation (TIMD) information, decoder side intra mode derivation (DIMD) information or linear model information, linear interpolation intra prediction (LIP) information, position dependent intra prediction (PDPC) information, multi reference line (MRL) information, template-based multiple reference line (TMRL) information, intra sub-partition (ISP) information, matrix-based intra prediction (MIP) information, interpolation filter information, mode dependent intra smoothing (MDIS) information, combined inter and intra prediction (CIIP) information, spatial geometric partition mode (SGPM) information, template matching intra prediction (intraTMP) information, intra prediction directional mode information, extended planar information, intra prediction fusion information, neighboring reference sample characteristic information or intra block copy (IBC) information.

According to an embodiment of the present disclosure, the neighboring blocks may be determined based on one of template matching, bi-lateral matching or the Sum of Absolute Transformed Differences (SATD).

According to an embodiment of the present disclosure, the intra prediction candidate index may be determined based on one of template matching, bi-lateral matching or the Sum of Absolute Transformed Differences (SATD).

According to an embodiment of the present disclosure, the order of the candidate intra prediction information included in the intra prediction candidate list may be reordered based on one of template matching or bi-lateral matching.

According to an embodiment of the present disclosure, the candidate intra prediction information may include information on whether a corresponding candidate intra prediction mode is applied.

According to an embodiment of the present disclosure, the candidate intra prediction information may further include additional information used to apply the corresponding candidate intra prediction mode.

According to an embodiment of the present disclosure, the prediction block may be generated based on at least one of the corresponding candidate intra prediction mode or the additional information.

According to an embodiment of the present disclosure, the number of the candidate intra prediction information included in the intra prediction candidate list may be determined based on at least one of a size of the current block, a position of a sub-block within the current block, a statistical characteristic of the neighboring blocks or whether a secondary transform is used for the current block.

According to an embodiment of the present disclosure, the order of obtaining the neighboring blocks may be determined based on at least one of a size of the current block, a position of a sub-block within the current block, a statistical characteristic of the neighboring blocks or whether a secondary transform is used for the current block.

According to an embodiment of the present disclosure, positions of the neighboring blocks may be determined based on at least one of a size of the current block, a position of a sub-block within the current block, a statistical characteristic of the neighboring blocks or whether a secondary transform is used for the current block.

According to an embodiment of the present disclosure, based on the current block being a chroma block, the intra prediction candidate list may be constructed based on the first candidate intra prediction information of a neighboring block of the chroma block and the second candidate intra prediction information of a luma block corresponding to the chroma block.

According to an embodiment of the present disclosure, based on the linear model information being included in the second candidate intra prediction information, the intra prediction candidate list may include at least one of the first intra prediction candidate list composed of the linear model information or the second intra prediction candidate list composed of information other than the linear model information.

According to an embodiment of the present disclosure, as an image encoding method performed by an image encoding apparatus, it includes obtaining at least one candidate intra prediction information based on intra prediction information of neighboring blocks of a current block, constructing an intra prediction candidate list based on the at least one candidate intra prediction information, generating a prediction block of a current block based on one candidate intra prediction information included in the intra prediction candidate list and encoding an intra prediction candidate index representing the one candidate intra prediction information, wherein the candidate intra prediction information may include at least one of template based intra mode derivation (TIMD) information, decoder side intra mode derivation (DIMD) information or linear model information, linear interpolation intra prediction (LIP) information, position dependent intra prediction (PDPC) information, multi reference line (MRL) information, template-based multiple reference line (TMRL) information, intra sub-partition (ISP) information, matrix-based intra prediction (MIP) information, interpolation filter information, mode dependent intra smoothing (MDIS) information, combined inter and intra prediction (CIIP) information, spatial geometric partition mode (SGPM) information, template matching intra prediction (intraTMP) information, intra prediction directional mode information, extended planar information, intra prediction fusion information, neighboring reference sample characteristic information or intra block copy (IBC) information.

According to an embodiment of the present disclosure, it may be a computer-readable recording medium storing a bitstream generated by an image encoding method.

According to an embodiment of the present disclosure, as a method for transmitting a bitstream generated by an image encoding method, the image encoding method includes obtaining at least one candidate intra prediction information based on intra prediction information of neighboring blocks of a current block, constructing an intra prediction candidate list based on the at least one candidate intra prediction information, generating a prediction block of a current block based on one candidate intra prediction information included in the intra prediction candidate list and encoding an intra prediction candidate index representing the one candidate intra prediction information, wherein the candidate intra prediction information may include at least one of template based intra mode derivation (TIMD) information, decoder side intra mode derivation (DIMD) information or linear model information, linear interpolation intra prediction (LIP) information, position dependent intra prediction (PDPC) information, multi reference line (MRL) information, template-based multiple reference line (TMRL) information, intra sub-partition (ISP) information, matrix-based intra prediction (MIP) information, interpolation filter information, mode dependent intra smoothing (MDIS) information, combined inter and intra prediction (CIIP) information, spatial geometric partition mode (SGPM) information, template matching intra prediction (intraTMP) information, intra prediction directional mode information, extended planar information, intra prediction fusion information, neighboring reference sample characteristic information or intra block copy (IBC) information.

[Advantageous Effects]

According to the present disclosure, an image encoding/decoding method and apparatus with improved encoding/decoding efficiency may be provided.

In addition, according to the present disclosure, an image encoding/decoding method and apparatus for effectively performing intra prediction may be provided.

In addition, according to the present disclosure, an image encoding/decoding method and apparatus for effectively generating an intra prediction candidate list may be provided.

In addition, according to the present disclosure, an image encoding/decoding method and apparatus for including various prediction modes when generating an intra prediction candidate list may be provided.

In addition, according to the present disclosure, a non-transitory computer-readable recording medium for storing a bitstream generated by the image encoding method or apparatus according to the present disclosure may be provided.

According to the present disclosure, a non-transitory computer-readable recording medium for storing a bitstream which is received and decoded by the image decoding apparatus according to the present disclosure and used for image reconstruction may be provided.

In addition, according to the present disclosure, a method for transmitting a bitstream generated by the image encoding method or apparatus according to the present disclosure may be provided.

The effects obtainable from the present disclosure are not limited to the effects described above, and other effects not described may be clearly understood by those of ordinary skill in the art from the following descriptions.

[Brief Description of Drawings]

FIG. 1 shows a schematic diagram of a video coding system to which an embodiment according to the present disclosure may be applied.

FIG. 2 shows a schematic diagram of an image encoding apparatus to which an embodiment according to the present disclosure may be applied.

FIG. 3 shows a schematic diagram of an image decoding apparatus to which an embodiment according to the present disclosure may be applied.

FIG. 4 is a flowchart showing an intra prediction-based video/image encoding method.

FIG. 5 shows an exemplary diagram of the configuration of an intra predictor according to the present disclosure.

FIG. 6 is a flowchart showing an intra prediction-based video/image decoding method.

FIG. 7 shows an exemplary diagram of the configuration of an intra predictor according to the present disclosure.

FIG. 8 is a diagram illustrating a template area used in a Template-based Intra Mode Derivation (TIMD) mode according to the present disclosure.

FIG. 9 is a diagram for describing a template matching-based encoding/decoding method according to the present disclosure.

FIG. 10 is a diagram illustrating the position of a neighboring block for constructing an intra prediction candidate list according to an embodiment of the present disclosure.

FIG. 11 is a diagram illustrating a neighboring block search position according to an embodiment of the present disclosure.

FIG. 12 is a flowchart representing a method for applying a merge mode according to the present disclosure.

FIG. 13 is a diagram illustrating the search position of a corresponding luma block according to an embodiment of the present disclosure.

FIG. 14 is a flowchart representing a method for applying a merge mode according to an embodiment of the present disclosure.

FIG. 15 is a flowchart of an encoding method according to an embodiment of the present disclosure.

FIG. 16 is a flowchart of a decoding method according to an embodiment of the present disclosure.

FIG. 17 is a diagram illustratively representing a content streaming system to which an embodiment according to the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "video" may mean a set of images over time.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an $M \times N$ block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

In the present disclosure, "at least one of A, B and C" may mean "only A," "only B," "only C," or "any combination of A, B and C." In addition, "at least one of A, B or C" or "at least one of A, B and/or C" may mean "at least one of A, B and C."

Parentheses used in the present disclosure may mean "for example." For example, when indicated as "prediction (intra prediction)", "intra prediction" may be proposed as an example of "prediction". In other words, "prediction" in the present disclosure is not limited to "intra prediction", and "intra prediction" may be proposed as an example of "prediction". In addition, even when indicated as "prediction (intra prediction)", "intra prediction" may be proposed as an example of "prediction".

## Overview of the video coding system

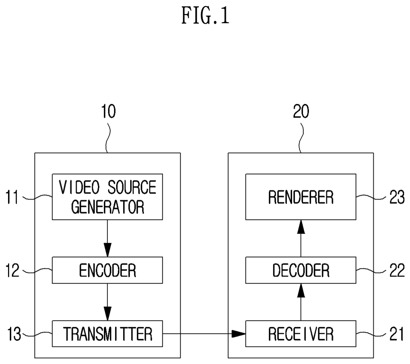

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoder 120, in which case the transmission apparatus may include at least one processor for obtaining the encoded video/image information or data in bitstream form and a transmitter for delivering it in the form of file or streaming. This receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

## Overview of the image encoding apparatus

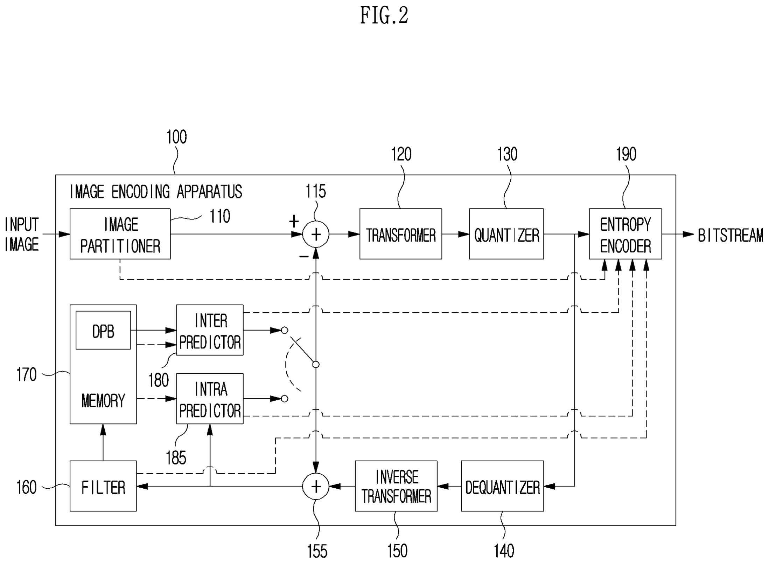

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an encoder or a processor), depending on the embodiment.

Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

Meanwhile, luma mapping with chroma scaling (LMCS) may be applied in picture encoding and/or reconstruction processes.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

**Overview of the image decoding apparatus**

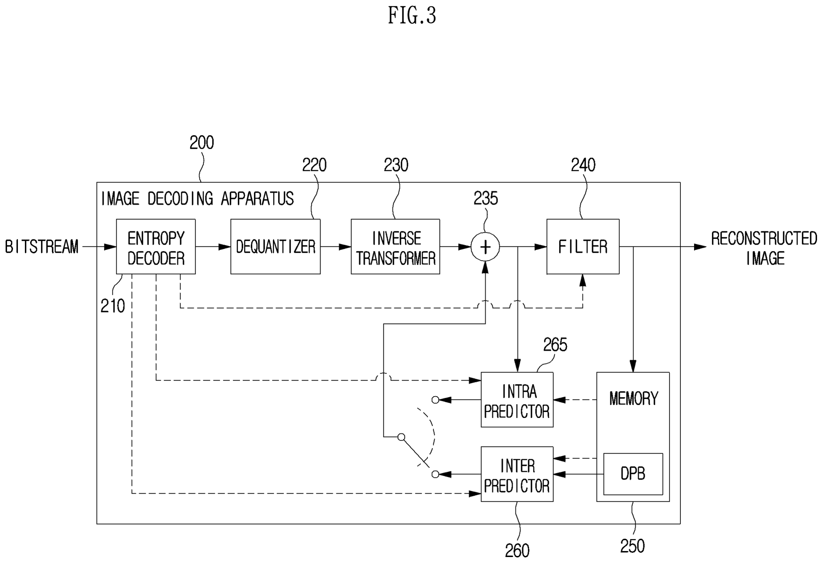

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., a decoder or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus may be additionally configured as an internal/external element of the image decoding apparatus 200, or the receiver may be configured as a component of the entropy decoder 210.

Meanwhile, the image decoding apparatus according to the present disclosure may also be referred to as a video/image/picture decoding apparatus. The image decoding apparatus may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method).

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

## Overview of Intra Prediction

Hereinafter, intra prediction according to the present disclosure will be described.

Intra prediction may refer to a prediction method which generates prediction samples for the current block based on reference samples within the picture to which the current block belongs (hereinafter, the current picture). When intra prediction is applied to the current block, neighboring reference samples to be used for intra prediction of the current block may be derived. The neighboring reference samples of the current block may include a total of $2 \times nH$ samples neighboring/adjacent to the left boundary and neighboring the bottom-left of the current block of $nW \times nH$ size, a total of $2 \times nW$ samples adjacent to the top boundary and neighboring the top-right of the current block, and one sample neighboring the top-left of the current block. Alternatively, the neighboring reference samples of the current block may include top neighboring samples of multiple columns and left neighboring samples of multiple rows. Additionally, the neighboring reference samples of the current block may include a total of nH samples neighboring a right boundary of the current block of a size of nWxnH, a total of nW samples neighboring a bottom boundary of the current block, and one sample neighboring a bottom-right of the current block.

However, some of the neighboring reference samples of the current block may not yet be decoded or may not be available. In this case, the decoder may construct the neighboring reference samples for prediction by substituting the unavailable samples with available samples. Alternatively, neighboring reference samples for prediction may be constructed through interpolation of the available samples.

When neighboring reference samples are derived, (i) prediction sample may be derived based on the average or interpolation of the neighboring reference samples of the current block, and (ii) prediction sample may be derived based on reference sample located in a specific (prediction) direction for prediction sample among the neighboring reference samples of the current block. Case (i) may be referred to as a non-directional mode or a non-angular mode, and case (ii) may be referred to as a directional mode or an angular mode.

Additionally, the prediction sample may be generated through interpolation between a first neighboring sample located in the prediction direction of the intra prediction mode of the current block and a second neighboring sample located in the opposite direction based on the prediction target sample of the current block among the neighboring reference samples. The above-described case may be referred to as linear interpolation intra prediction (LIP).

Additionally, chroma prediction samples may be generated based on luma samples using a linear model. This case may be called Linear Model (LM) mode.

Additionally, a temporary prediction sample of the current block may be derived based on filtered neighboring reference samples, and a prediction sample of the current block may be derived by calculating a weighted sum of at least one of a reference sample derived according to the intra prediction mode among the conventional neighboring reference samples, i.e. unfiltered neighboring reference samples, and the temporary prediction sample. This case is referred to as Position-dependent intra prediction (PDPC).

Additionally, a reference sample line with the highest prediction accuracy among the multiple neighboring reference sample lines of the current block may be selected, and a prediction sample may be derived using a reference sample located in the prediction direction in the corresponding line. In this case, information about the used reference sample line (i.e., intra_luma_ref_idx) may be encoded and signaled in the bitstream. In this case, it is referred to as multi-reference line intra prediction (MRL) or MRL-based intra prediction. When MRL is not applied, reference samples may be derived from a reference sample line directly adjacent to the current block, and in this case, information about the reference sample line may not be signaled.

Additionally, the current block may be divided into vertical or horizontal subpartitions, and intra prediction may be performed based on the same intra prediction mode for each subpartition. In this case, neighboring reference samples for intra prediction may be derived for each subpartition unit. In other words, the reconstructed sample of the previous subpartition in the encoding/decoding order may be used as the neighboring reference sample of the current subpartition. In this case, the intra prediction mode for the current block is applied identically to the subpartitions, and the neighboring reference sample are derived and used for each subpartition unit, thereby intra prediction performance may be improved in some cases. This prediction method is referred to as intra sub-partitions (ISP) or ISP-based intra prediction.

The intra prediction methods described above may be referred to by various terms, such as intra prediction type or additional intra prediction mode, to distinguish them from directional or non-directional intra prediction mode. For example, the intra prediction method (i.e., intra prediction type or additional intra prediction mode, etc.) may include at least one of the above-described LIP, LM, PDPC, MRL, or ISP. A general intra prediction method that excludes specific intra prediction type such as the LIP, the LM, the PDPC, the MRL, the ISP, etc. may be referred to as a normal intra prediction type. The normal intra prediction type may be generally applied when the specific intra prediction type described above is not used, and prediction may be performed based on the intra prediction mode described above. Meanwhile, post-processing filtering may be performed on the derived prediction sample when necessary.

Specifically, the intra prediction procedure may include an intra prediction mode/type determination step, a neighboring reference sample derivation step, and an intra prediction mode/type-based prediction sample derivation step. Additionally, a post-filtering step may be performed on the derived prediction sample when necessary.

Meanwhile, in addition to the intra prediction types described above, affine linear weighted intra prediction (ALWIP) may be used. The ALWIP may also be referred to as linear weighted intra prediction (LWIP) or matrix weighted intra prediction or matrix-based intra prediction (MIP). When MIP is applied to a current block, prediction samples for the current block may be derived by i) using neighboring reference samples on which an averaging procedure has been performed, ii) performing a matrix-vector multiplication procedure, and iii) further performing a horizontal/vertical interpolation procedure when necessary. Intra prediction modes used for MIP may be configured differently from those used in LIP, PDPC, MRL, ISP intra prediction, or normal intra prediction described above. The intra prediction mode for MIP may be referred to as the MIP intra prediction mode, MIP prediction mode, or MIP mode. For example, the matrix and offset used in the matrix-vector multiplication may be set differently depending on the intra prediction mode for MIP. Here, the matrix may be referred to as (MIP) weight matrix, and the offset may be referred to as the (MIP) offset vector or (MIP) bias vector. A specific MIP method will be described later.

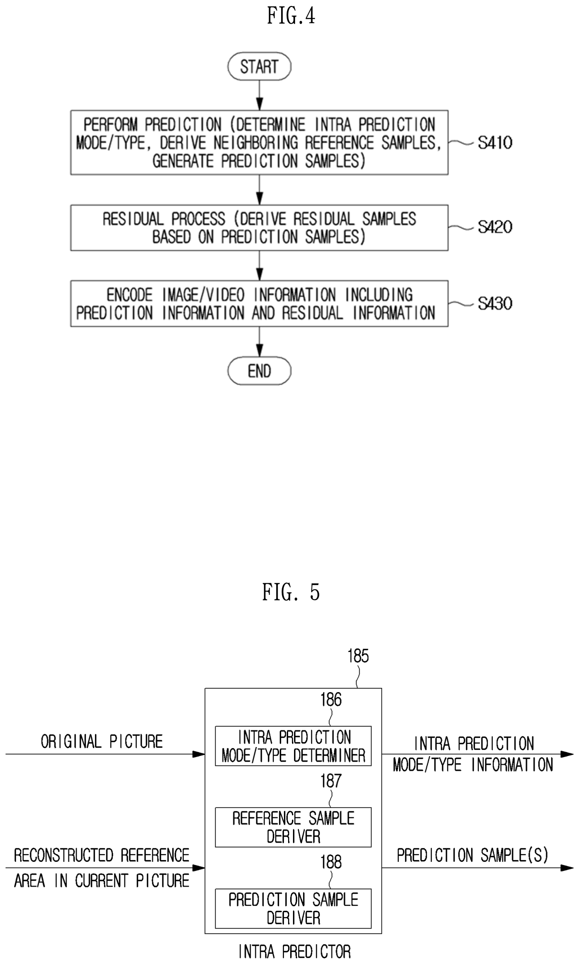

The block reconstruction procedure based on intra prediction and the intra predictor in the encoding apparatus will be described later with reference to FIG. 4 and FIG. 5.

FIG. 4 is a flowchart showing an intra prediction-based video/image encoding method.

The encoding method of FIG. 4 may be performed by the image encoding apparatus of FIG. 2. Specifically, step S410 may be performed by the intra predictor 185, and step S420 may be performed by the residual processor. Specifically, step S420 may be performed by the subtractor 115. Step S430 may be performed by the entropy encoder 190. The prediction information in step S430 may be derived by the intra predictor 185, and the residual information in step S430 may be derived by the residual processor. The residual information refers to information about the residual samples. The residual information may include information on the quantized transform coefficients of the residual samples. As described above, the residual samples are derived as transform coefficients through the transformer 120 of the image encoding apparatus, and the transform coefficients may be derived as quantized transform coefficients through the quantizer 130. The information on the quantized transform coefficients may be encoded in the entropy encoder 190 through the residual coding process.

The image encoding apparatus may perform intra prediction for the current block S410. The image encoding apparatus may determine the intra prediction mode/type for the current block, may derive neighboring reference samples of the current block, and may generate prediction samples within the current block based on the intra prediction mode/type and the neighboring reference samples. Here, the processes of determining the intra prediction mode/type, deriving the neighboring reference samples, and generating the prediction samples may be performed simultaneously, or one process may be performed before another.

FIG. 5 shows an exemplary diagram of the configuration of an intra predictor 185 according to the present disclosure.

As shown in FIG. 5, the intra predictor 185 of the image encoding apparatus may include an intra prediction mode/type determiner 186, a reference sample deriver 187, and/or a prediction sample deriver 188. The intra prediction mode/type determiner 186 may determine the intra prediction mode/type for the current block. The reference sample deriver 187 may derive the neighboring reference samples of the current block. The prediction sample deriver 188 may derive the prediction samples of the current block. Meanwhile, although not illustrated, when the prediction sample filtering process which will be described later is performed, the intra predictor 185 may further include a prediction sample filter (not shown).

The image encoding apparatus may determine the intra prediction mode/type applied to the current block among a plurality of intra prediction modes/types. The image encoding apparatus may compare the rate-distortion costs (RD cost) of the intra prediction modes/types and may determine the optimal intra prediction mode/type for the current block.

Meanwhile, the image encoding apparatus may perform a prediction sample filtering process. Prediction sample filtering may be referred to as post-filtering. Through the prediction sample filtering process, some or all of the prediction samples may be filtered. In some cases, the prediction sample filtering process may be omitted.

Referring again to FIG. 4, the image encoding apparatus may generate residual samples for the current block based on the prediction samples or the filtered prediction samples S420. The image encoding apparatus may derive the residual samples by subtracting the prediction samples from the original samples of the current block. In other words, the image encoding apparatus may derive residual sample value by subtracting the corresponding prediction sample value from the original sample value.

The image encoding apparatus may encode image information including information about the intra prediction (prediction information) and residual information about the residual samples S430. The prediction information may include intra prediction mode information and/or intra prediction method information. The image encoding apparatus may output the encoded image information in the form of a bitstream. The output bitstream may be transmitted to the image decoding apparatus through a storage medium or a network.

The residual information may include a residual coding syntax, which will be described later. The image encoding apparatus may derive quantized transform coefficients by transforming/quantizing the residual samples. The residual information may include information on the quantized transform coefficients.

Meanwhile, as described above, the image encoding apparatus may generate a reconstructed picture (including reconstructed samples and reconstructed block). The image encoding apparatus may perform dequantization/inverse transform on the quantized transform coefficients to derive (modified) residual samples. The reason for applying dequantization/inverse transform after transform/quantization of the residual samples is to derive the residual samples identical to the residual samples derived in the image decoding apparatus. The image encoding apparatus may generate a reconstructed block including reconstructed samples for the current block based on the prediction samples and the (modified) residual samples. A reconstructed picture for the current picture may be generated based on the reconstructed block. As described above, an in-loop filtering process may further be applied to the reconstructed picture.

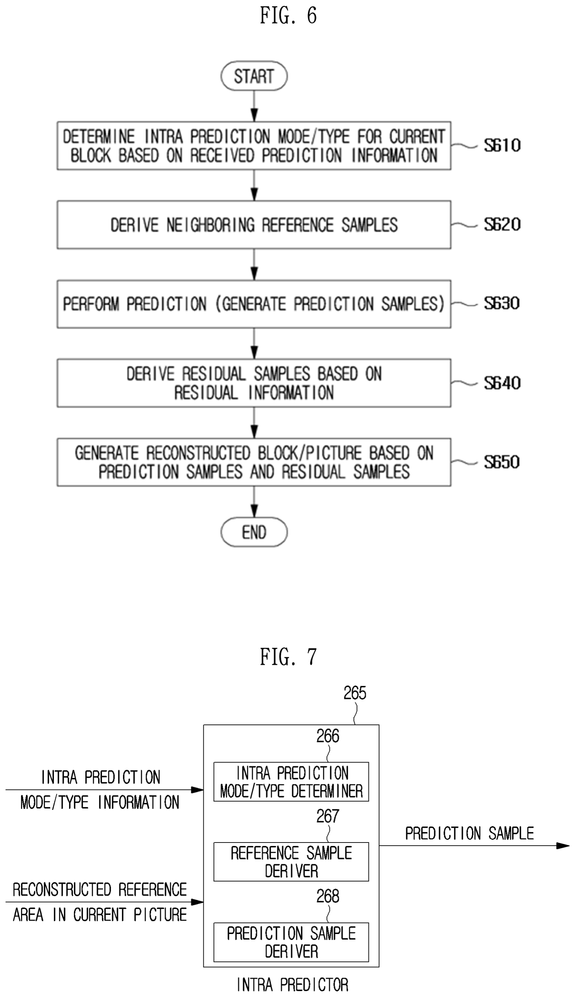

FIG. 6 is a flowchart showing an intra prediction-based video/image decoding method.

The image decoding apparatus may perform operations corresponding to the operations performed in the image encoding apparatus.

The decoding method in FIG. 6 may be performed by the image decoding apparatus in FIG. 3. Steps S610 to S630 may be performed by the intra predictor 265, and the prediction information in step S610 and the residual information in step S640 may be obtained from the bitstream by the entropy decoder 210. The residual processor of the image decoding apparatus may derive residual samples for the current block based on the residual information S640. Specifically, the dequantizer 220 of the residual processor may perform dequantization on the quantized transform coefficients derived based on the residual information to obtain transform coefficients, and the inverse transformer 230 of the residual processor may perform inverse transform on the transform coefficients to derive residual samples for the current block. Step S650 may be performed by the adder 235 or the reconstructor.

Specifically, the image decoding apparatus may derive the intra prediction mode/type for the current block based on the received prediction information (i.e., intra prediction mode/type information) S610. Additionally, the image decoding apparatus may derive neighboring reference samples of the current block S620. The image decoding apparatus may generate prediction samples within the current block based on the intra prediction mode/type and the neighboring reference samples S630. In this case, the image decoding apparatus may perform a prediction sample filtering process. Prediction sample filtering may be referred to as post-filtering. Through this prediction sample filtering process, some or all of the prediction samples may be filtered. In some cases, the prediction sample filtering process may be omitted.

The image decoding apparatus may generate residual samples for the current block based on the received residual information S640. The image decoding apparatus may generate reconstructed samples for the current block based on the prediction samples and the residual samples and derive a reconstructed block that includes the reconstructed samples S650. A reconstructed picture for the current picture may be generated based on the reconstructed block. As described above, an in-loop filtering process may further be applied to the reconstructed picture.

FIG. 7 shows an exemplary diagram of the configuration of an intra predictor 265 according to the present disclosure.

As shown in FIG. 7, the intra predictor 265 of the image decoding apparatus may include an intra prediction mode/type determiner 266, a reference sample deriver 267, and a prediction sample deriver 268. The intra prediction mode/type determiner 266 may determine the intra prediction mode/type for the current block based on the intra prediction mode/type information generated in the intra prediction mode/type determiner 186 of the image encoding apparatus and signaled, and the reference sample deriver 266 may derive neighboring reference samples of the current block from the reconstructed reference area in the current picture. The prediction sample deriver 268 may derive prediction samples of the current block. Meanwhile, although not illustrated, when the above-described prediction sample filtering process is performed, the intra predictor 265 may further include a prediction sample filter (not shown).

The intra prediction mode information may include, for example, flag information (i.e., intra_luma_mpm_flag) indicating whether the most probable mode (MPM) is applied to the current block or the remaining mode is applied, and when the MPM is applied to the current block, the intra prediction mode information may further include index information (i.e., intra_luma_mpm_idx) indicating one of the intra prediction mode candidates (MPM candidates). The intra prediction mode candidates (MPM candidates) may be configured as an MPM candidate list or an MPM list. Additionally, when the MPM is not applied to the current block, the intra prediction mode information may further include remaining mode information (i.e., intra_luma_mpm_remainder) indicating one of the remaining intra prediction modes excluding the intra prediction mode candidates (MPM candidates). The image decoding apparatus may determine the intra prediction mode of the current block based on the intra prediction mode information.

Additionally, the intra prediction method information may be implemented in various forms. As an example, the intra prediction method information may include intra prediction method index information indicating one of the intra prediction methods. As another example, the intra prediction method information may include at least one of reference sample line information (i.e., intra_luma_ref_idx) indicating whether the MRL is applied to the current block and, when the MRL is applied, which reference sample line is used, ISP flag information (i.e., intra_subpartitions_mode_flag) indicating whether the ISP is applied to the current block, ISP type information (i.e., intra_subpartitions_split_flag) indicating a split type of subpartitions when the ISP is applied, flag information indicating whether PDPC is applied, or flag information indicating whether LIP is applied. Additionally, the intra prediction type information may include a MIP flag indicating whether MIP is applied to the current block. In the present disclosure, the ISP flag information may be referred to as an ISP application indicator.

The intra prediction mode information and/or the intra prediction method information may be encoded/decoded through the coding method described in the present disclosure. For example, the intra prediction mode information and/or the intra prediction method information may be encoded/decoded through entropy coding (i.e., CABAC, CAVLC) based on truncated (rice) binary code.

Meanwhile, in addition to PLANAR mode, DC mode, and directional intra prediction modes, the intra prediction mode may further include a cross-component linear model (CCLM) mode for chroma sample. The CCLM mode may be classified into L_CCLM, T_CCLM, and LT_CCLM depending on whether left samples, top samples, or both are considered for deriving CCLM parameter, and it may be applied only to chroma component.

The intra prediction mode, for example, may be indexed as shown in Table 1 below.

[Table 1]

| Intra prediction mode | Associated name |
| --- | --- |
| 0 | INTRA_PLANAR |
| 1 | INTRA_DC |
| 2..66 | INTRA_ANGULAR2..INTRA_ANGULAR66 |
| 81..83 | INTRA_LT_CCLM, INTRA_L_CCLM, INTRA_T_CCLM |

Meanwhile, the intra prediction type (or additional intra prediction mode, etc.) may include at least one of LIP, PDPC, MRL, ISP, or MIP described above. The intra prediction type may be indicated based on intra prediction type information, and the intra prediction type information may be implemented in various forms. As an example, the intra prediction type information may include an intra prediction type index that indicates one of the intra prediction types. In another example, the intra prediction type information may include at least one of reference sample line information (i.e., intra_luma_ref_idx) indicating whether MRL is applied to the current block and, when MRL is applied, which reference sample line is used, an ISP flag information (i.e.,

intra_subpartitions_mode_flag) indicating whether ISP is applied to the current block; ISP type information (i.e., intra_subpartitions_split_flag) indicating the partitioning type of subpartitions when ISP is applied, a flag information indicating whether PDPC is applied, or a flag information indicating whether LIP is applied. Additionally, the intra prediction type information may include an MIP flag (which may be referred to as intra_mip_flag) indicating whether MIP is applied to the current block.

## Overview of Template-based intra mode derivation (TIMD)

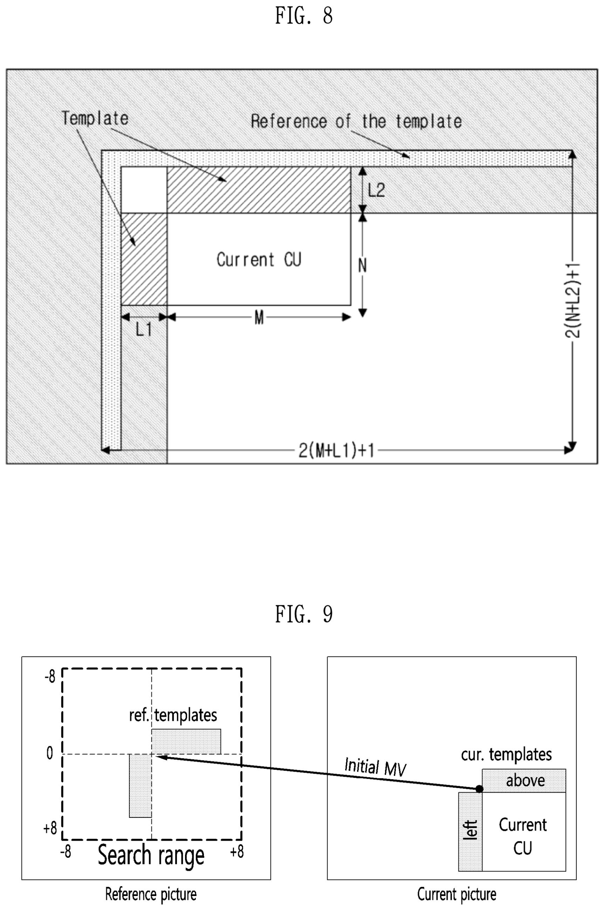

FIG. 8 is a diagram illustrating a template area used in a TIMD mode according to the present disclosure. For the intra prediction mode (IPM) intra mode of a neighboring adjacent intra block and inter block, as in FIG. 8, after calculating the sum of absolute transformed differences (SATD) between a prediction block predicted from a template area and an actual reconstructed sample, a mode with the smallest SATD may be selected as the intra mode of a current block.

In other words, the first two intra prediction modes with the minimum SATD are selected as a TIMD mode. These two TIMD modes are fused with a weight, and this weighted intra prediction is used to encode a current CU. Position dependent intra prediction combination (PDPC) may be included in the derivation process of a TIMD mode.

The cost of two selected modes is compared with a threshold value, and two cost factors are applied in a test as follows.
costMode2 < 2*costMode1
If the condition is true, fusion is applied, and otherwise, only mode 1 is used.
The weight of a mode is calculated by their SATD cost as follows.

$$weight1 = costMode2/(costMode1 + costMode2)$$

weight2 = 1 - weight1

## Template matching(TM)

FIG. 9 is a diagram for describing a template matching-based encoding/decoding method according to the present disclosure.
Template Matching (TM) is a method for deriving a motion vector performed on a decoder side, which is a method for refining the motion information of a current block by finding a template (hereinafter, referred to as a "reference template") in a reference picture that is most similar to a template (hereinafter, referred to as a "current template") adjacent to a current block (e.g., current coding unit, current CU). A current template may be the above neighbor block and/or the left neighbor block of a current block or a part of their neighbor block. In addition, a reference template may be determined to have the same size as a current template.
As shown in FIG. 9, when the initial motion vector of a current block is derived, a search for a better motion vector may be performed in the neighboring area of an initial motion vector. For example, the range of a neighboring area where the search is performed may be within a [-8, +8]-pel search range based on an initial motion vector. In addition, the size of a search step for performing a search may be determined based on the AMVR mode of a current block. In addition, template matching may be performed continuously with a bilateral matching process in a merge mode.

When the prediction mode of a current block is an AMVP mode, a motion vector predictor candidate (MVP candidate) may be determined based on a template matching error. For example, a motion vector predictor candidate (MVP candidate) that minimizes an error between a current template and a reference template may be selected. Afterwards, template matching for refining a motion vector may be performed on the selected motion vector predictor candidate. In this case, template matching for refining a motion vector may not be performed on a motion vector predictor candidate that is not selected.

More specifically, refinement for the selected motion vector predictor candidate may start from full-pel (integer-pel) accuracy within a [-8, +8]-pel search range by using an iterative diamond search. Alternatively, for a 4-pel AMVR mode, it may start from 4-pel accuracy. Afterwards, a search for half-pel and/or quarter-pel accuracy may be followed according to an AMVR mode. According to the search process, a motion vector predictor candidate may maintain the same motion vector accuracy as indicated by an AMVR mode even after a template matching process. In the iterative search process, when a difference between a previous minimum cost and a current minimum cost is less than an arbitrary threshold value, the search process is terminated. The threshold value may be the same as the area of a block, i.e., the number of samples in a block. Table 2 is an example of a search pattern according to an AMVR mode and a merge mode with AMVR.

[Table 2]

| Search pattern | AMVR mode | | | | Merge mode | |
|---|---|---|---|---|---|---|
| | 4-pel | Full-pel | Half-pel | Quarter-pel | AltIF=0 | AltIF=1 |
| 4-pel diamond | V | | | | | |
| 4-pel cross | V | | | | | |
| Full-pel diamond | | V | V | V | V | V |
| Full-pel cross | | V | V | V | V | V |
| Half-pel cross | | | V | V | V | V |
| Quarter-pel cross | | | | V | V | |
| 1/8-pel cross | | | | | V | |

When the prediction mode of a current block is a merge mode, a similar search method may be applied to a merge candidate indicated by a merge index. As shown in Table 2 above, template matching may be performed up to 1/8-pel accuracy or may skip half-pel accuracy or lower, which may be determined depending on whether an alternative interpolation filter is used according to merge motion information. In this case, the alternative interpolation filter may be a filter used when AMVR is a half-pel mode. In addition, when template matching is available, the template matching may operate as an independent process according to whether bilateral matching (BM) is available, or may operate as an additional motion vector refinement process between block-based bilateral matching and sub-block-based bilateral matching. Whether the template matching is available and/or whether bilateral matching is available may be determined according to checking availability conditions. In the above, the accuracy of a motion vector may mean the accuracy of a motion vector difference (MVD).

Hereinafter, an image encoding/decoding method according to an embodiment of the present disclosure will be described in detail.

The present disclosure may relate to intra prediction. Specifically, the present disclosure may relate to a method for adaptively selecting and/or applying an intra prediction method by utilizing the encoding information of a neighboring block during intra prediction based on a directional and/or non-directional mode in an intra prediction mode. In other words, the present disclosure may relate to a method for selecting and/or applying an intra prediction method by utilizing the intra prediction information (e.g., candidate intra prediction information) of a neighboring block during intra prediction.

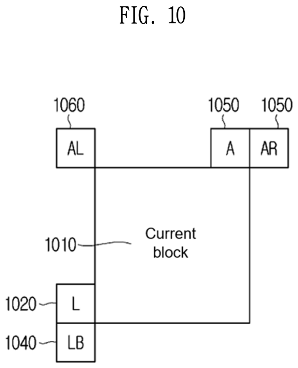

FIG. 10 is a diagram illustrating the position of a neighboring block for constructing an intra prediction candidate list according to an embodiment of the present disclosure. In the case of conventional intra prediction, the intra prediction candidate list (i.e., MPM list) of the current block (1010) may be constructed by utilizing intra prediction information of the neighboring blocks (1020, 1030, 1040, 1050, 1060). In addition, in the case of the Enhanced Compression Model (ECM), the intra prediction candidate list of the current block (1010) may be constructed by searching and/or selecting intra prediction modes of the neighboring blocks in the order of left neighboring block (1020), top neighboring block (1030), bottom-left neighboring block (1040), top-right neighboring block (1050), and top-left neighboring block (1060).

In this case, the intra prediction candidate list of a current block 1010 may be composed of a directional intra mode and/or a non-directional intra mode (e.g., a planar mode, a DC mode). However, various intra prediction modes for predicting a current block may exist in current versatile video coding (VVC). For example, an intra prediction mode may include prediction modes such as a Multi Reference Line (MRL) prediction mode, an Intra sub-partition (ISP) prediction mode, a Matrix-based Intra Prediction (MIP) prediction mode, a Cross-Component Linear Model (CCLM) prediction mode and an Intra Block Copy (IBC) prediction mode, etc. other than a conventional intra mode (a directional mode, a non-directional mode).

In addition, for ECM, an intra prediction mode may include various intra prediction modes such as an extended planar mode, gradient position dependent intra prediction (PDPC), a template-based MRL (TMRL), a 6-tap interpolation filter, decoder side intra mode derivation (DIMD), template-based intra mode derivation (TIMD), combined inter and intra prediction (CIIP) PDPC blending, a spatial geometric partitioning mode (SGPM), intra prediction fusion, intra template matching (intraTMP), IBC, linear mode (LM) parameter signaling, a multi-model linear mode (MMLM), chroma intra fusion, a convolutional cross-component model (CCCM), a gradient linear model (GLM), a gradient and location based convolutional cross-component model (GL-CCCM), etc. Various intra prediction modes described above may be referred to as general intra prediction information.

An existing intra prediction candidate list may be composed only of a conventional intra mode (a directional mode, a non-directional mode). Accordingly, various intra prediction modes such as SGPM, intra template matching, etc. described above may not be considered when constructing an intra prediction candidate list. In this case, there may be a disadvantage that the intra prediction information of neighboring blocks may not be entirely utilized.

The present disclosure proposes a merge mode-based intra prediction method for utilizing various intra prediction information (i.e., general intra prediction information) of a neighboring block during the intra prediction of a current block. In other words, the present disclosure proposes a method for efficiently utilizing all general intra prediction information such as SGPM, GLM, CCCM, DIMD, TIMD, etc. other than the conventional prediction mode of a neighboring block.

## Embodiment 1

The present disclosure proposes a merge mode that utilizes the general intra prediction information of a neighboring block for a current block during the intra prediction of a luma block. In other words, the present disclosure proposes a merge mode that utilizes various intra prediction information of a neighboring block during the intra prediction of a luma block.

Conventionally, only the conventional intra prediction information of a neighboring block is considered during the intra prediction of a current block. However, since more diverse methods are used during intra prediction in VVC and ECM, intra prediction considering only conventional intra prediction information may be inefficient.

In an embodiment according to the present disclosure, the general intra prediction information of a neighboring block may be utilized to construct an intra prediction candidate list to be applied to a current encoding block and/or a current decoding block. Accordingly, the present disclosure may select one candidate intra prediction information among the candidate intra prediction information included in an intra prediction candidate list and apply it to a current block. In other words, the present disclosure may perform intra prediction by selecting one candidate intra prediction information among the candidate intra prediction information included in an intra prediction candidate list.

In order to construct an intra prediction candidate list, the present disclosure may collect general intra prediction information after searching the neighboring block of a current block to be encoded and/or decoded. The general intra prediction information of a neighboring block may include the following prediction information.

- Intra prediction directional mode information
- Extended planar information
- MRL information
- TMRL information
- ISP information
- MIP information
- Interpolation filter information
- DIMD information
- TIMD information
- SGPM information
- Intra prediction fusion information
- intraTMP information
- IBC information
- Neighboring reference sample characteristic information

Here, specific mode information may include information representing whether a specific mode is applied. For example, MRL information may include information representing whether MRL is applied. As another example, TIMD information may include information representing whether TIMD is applied. In other words, general intra prediction information may include the intra prediction coding status information of an encoded and/or decoded neighboring block. More specifically, "information" described above may include various information such as mode information, a mode index, a reference sample index, a reference sample characteristic, template matching information, mode merging, a weight, etc.

For example, when a SGPM mode is applied to the left neighboring block 1020 of FIG. 10, whether SGPM is applied may be True. In addition, applied SGPM information (e.g., a SGPM direction, an intra prediction mode applied to two blocks, etc.) may also be collected. As another example, when directional mode 33 and TMRL are applied together to the top-right neighboring block 1050 of FIG. 10, an applied intra prediction mode, reference sample line information selected by TMRL, etc., may be additionally collected.

As another example, when intraTMP is applied to the top neighboring block 1030 of FIG. 10, whether intraTMP is applied, applied intraTMP additional information, etc. may be additionally collected. A method for collecting the intra prediction information of a neighboring block proposed in the present disclosure is not limited to the above-described example, and when intra prediction information not included in the above-described examples is newly proposed, corresponding intra prediction information may also be collected through the same method.

The present disclosure may select the neighboring blocks (1020, 1030, 1040, 1050, 1060) of FIG. 10 to search a neighboring block. Accordingly, the present disclosure may search corresponding neighboring blocks (1020, 1030, 1040, 1050, 1060). In other words, the intra prediction information of neighboring blocks (1020, 1030, 1040, 1050, 1060) may be collected. In this case, the present disclosure may search neighboring blocks in the following search order.

- Left neighboring block 1020 -> Top neighboring block 1030 -> Bottom-left neighboring block 1040 -> Top-right neighboring block 1050 -> Top-left neighboring block 1060
- Left neighboring block 1020 -> Top neighboring block 1030 -> Top-right neighboring block 1050 -> Bottom-left neighboring block 1040 -> Top-left neighboring block 1060
- Top neighboring block 1030 -> Left neighboring block 1020 -> Top-right neighboring block 1050 -> Bottom-left neighboring block 1040 -> Top-left neighboring block 1060

The search order of neighboring blocks according to the present disclosure is not limited to the above-described order, and the present disclosure may search a neighboring block in various orders.

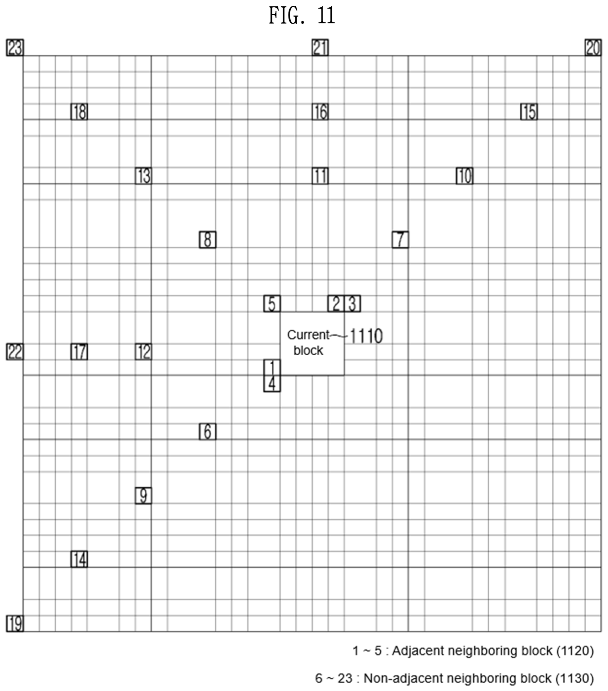

FIG. 11 is a diagram illustrating a neighboring block search position according to an embodiment of the present disclosure. The present disclosure may collect intra prediction information by searching a non-adjacent neighboring block 1130 in addition to searching a neighboring block 1120 adjacent to a current block 1110. Referring to FIG. 11, the present disclosure may collect the intra prediction information of a neighboring block 1130 not adjacent to a current block after collecting the intra prediction information of a neighboring block 1120 adjacent to a current block. In addition, according to an embodiment of the present disclosure, the number of neighboring blocks illustrated in FIG. 11 may represent the search order of neighboring blocks. However, the present disclosure is not limited thereto, and a neighboring block may be searched in various orders.

According to an embodiment of the present disclosure, after comparing the reference sample characteristics of a current block with the reference sample characteristics of a neighboring block, the intra prediction information of a corresponding block may be collected only when a specific condition is satisfied. In this case, a comparison between reference samples may be performed based on one of template matching, bilateral matching or the sum of absolute transformed differences (SATD). In other words, a neighboring block configuring an intra prediction candidate list may be determined based on a comparison between the reference sample of a current block and the reference sample of a neighboring block.

In addition, according to an embodiment of the present disclosure, an intra prediction index representing candidate intra prediction information within an intra prediction candidate list may be determined based on one of template matching, bilateral matching or SATD.

The search position and/or search order of adjacent neighboring blocks and/or non-adjacent neighboring blocks proposed in the present disclosure are not limited to the above-described example, and more diverse search positions, the number of search positions and/or search order may be included.

When intra prediction information is collected from an adjacent neighboring block and/or a non-adjacent neighboring block according to the present disclosure, N intra prediction information to be applied to a current block may be collected on a first-come-first-served basis from neighboring blocks. In other words, after searching neighboring blocks based on predetermined order, N intra prediction information may be collected from neighboring blocks. When all of the N intra prediction information is collected, the search of a neighboring block may be terminated. In this case, N may be a variety of natural numbers such as 3, 6, etc.

When N intra prediction information is collected on a first-come-first-served basis according to the present disclosure, a neighboring block having the same intra prediction information may be excluded from an intra prediction candidate list by performing a pruning check through the following methods.

- Method 1. Perform a pruning check by checking both whether an intra prediction mode is applied and additional information used to apply an intra prediction mode
- Method 2. Perform a pruning check by checking only whether an intra prediction mode is applied
- Method 3. Not perform a pruning check

In other words, after searching a neighboring block in predetermined order, the intra prediction information of a neighboring block having the same intra prediction information may be excluded from an intra prediction candidate list. For example, when a pruning check is performed by checking only whether an intra prediction mode is applied as in Method 2, corresponding intra prediction information may be excluded from an intra prediction candidate list through a pruning check even when additional information used to apply a corresponding intra prediction mode (hereinafter referred to as 'intra prediction additional information') is different. In other words, when the first intra prediction information and the second intra prediction information are included in an intra prediction candidate list and intra prediction modes included in the first intra prediction information and the second intra prediction information are the same, intra prediction information added later (or, intra prediction information added first) may be excluded from an intra prediction candidate list even when intra prediction additional information included in the first intra prediction information and the second intra prediction information are different.

Alternatively, decoding complexity in an image decoding apparatus 200 may be reduced by not performing a pruning check as in Method 3. Alternatively, encoding complexity in an image encoding apparatus 100 may be reduced by not performing a pruning check as in Method 3.

When an intra prediction candidate list is not filled with pre-configured N intra prediction information even after searching an adjacent neighboring block and/or a non-adjacent neighboring block, an intra prediction candidate list may be filled with pre-configured default modes. In this case, default modes may be configured according to the number of intra prediction information of a pre-determined intra prediction candidate list. In other words, when N intra prediction information is filled in an intra prediction candidate list, N default modes may be configured. The present disclosure is not limited thereto, and M default modes may be configured regardless of the number of intra prediction information of an intra prediction candidate list.

According to an embodiment of the present disclosure, after N candidate intra prediction information is generated, the order of candidate intra prediction information may be reordered through template matching, bilateral matching, etc. For example, after all of the N candidate intra prediction information is filled in an intra prediction candidate list, candidate intra prediction information may be reordered in order of template cost after performing template matching by using neighboring reference samples in a similar way to a TMRL or TIMD method. In this case, the reordering of candidate intra prediction information within an intra prediction candidate list may be performed in ascending order of template cost.

The present disclosure may perform intra prediction by selecting one of the N candidate intra prediction information generated by the above-described method and applying selected candidate intra prediction information to a current block. In this case, intra prediction may be performed by using the following methods.

- Method 4. Apply only an intra prediction mode included in selected candidate intra prediction information to a current block Transmit intra prediction additional information to an image decoding apparatus 200
- Method 5. Apply both intra prediction additional information and an intra prediction mode included in selected candidate intra prediction information equally to a current block
- Method 6. Modify intra prediction additional information and an intra prediction mode included in selected candidate intra prediction information to suit a current block and apply them

For example, in Method 4, when directional mode 50 is included as an intra prediction mode and MRL index 7 is included as intra prediction additional information in selected candidate intra prediction information, directional mode 50 may be applied to a current block. In this case, a MRL index more suitable for a current block may be transmitted to an image decoding apparatus 200. In other words, an image encoding apparatus 100 may apply only an intra prediction mode among the candidate intra prediction information to a current block, and may not apply intra prediction additional information to a current block.

For example, in Method 5, when a DIMD mode is included as an intra prediction mode and information in which planar modes 18, 50, 33 and 66 are combined is included as intra prediction additional information in selected candidate intra prediction information, DIMD may be performed by combining predictors generated in planar modes 18, 50, 33 and 66 to perform intra prediction on a current block.

For example, in Method 6, when a SGPM mode is included as an intra prediction mode and a block partitioning direction and intra prediction information of two partitioned blocks are included as intra prediction additional information in selected candidate intra prediction information, intra prediction on a current block may be adaptively performed by considering the position of a candidate block (a neighboring block) representing selected candidate intra prediction information and the position of a current block. In other words, intra prediction may be performed by adaptively applying a block partitioning direction and the intra prediction mode of two partitioned blocks to a current block.

According to an embodiment of the present disclosure, the number of candidate intra prediction information configuring an intra prediction candidate list, a neighboring block search position, the neighboring block search order, collected candidate intra prediction information, etc. may be variously determined according to the width of an input block, the height of an input block, the number of pixels of an input block, the position of a sub-block within an input block, an explicitly signaled syntax element, statistical characteristics of neighboring pixels, whether to use a secondary transform, etc. Here, an input block may be a current block.

According to an embodiment of the present disclosure, an intra prediction candidate index representing one candidate intra prediction information included in an intra prediction candidate list may be determined based on at least one of a prediction mode (e.g., an inter prediction mode, an intra prediction mode), the width of an input block, the height of an input block, the number of pixels of an input block, the position of a sub-block within an input block, an explicitly signaled syntax element, statistical characteristics of neighboring pixels and whether to use a secondary transform, etc.

According to the present disclosure, candidate intra prediction information may be binarized by using an appropriate binarization method and then transmitted to an image decoding apparatus 200. For example, as in intra luma mode transmission, an intra prediction candidate index may be configured as a MPM mode and the remaining intra prediction information may be binarized separately. In other words, the intra prediction information of a current block may be configured as a MPM mode and binarized, and the remaining intra prediction information may be binarized separately. The present disclosure may save binarization bits by performing appropriate context modeling when binarizing each intra prediction information. Alternatively, the present disclosure may transmit candidate intra prediction information to an image decoding apparatus 200 by using a binarization method such as truncated binary, truncated unary, fixed length, etc. considering the number of candidate intra prediction information included in an intra prediction candidate list.

Information representing whether a method proposed in the present disclosure (i.e., a merge mode) is applied (hereinafter referred to as 'information on whether to apply a merge mode') may be signaled through a high-level syntax (HLS). In other words, this information on whether to apply a merge mode may be signaled through a video parameter set (VPS), a sequence parameter set (SPS), a picture parameter set (PPS), a picture header, a slice header, DCI, etc. For example, in order to determine whether to apply a merge mode in the unit of a PPS, information on whether to apply a merge mode may be signaled through a PPS.

In addition, an image decoding apparatus 200 may adaptively determine whether to apply a merge mode without signaling information on whether to apply a merge mode. Alternatively, an image decoding apparatus 200 may determine whether to apply a merge mode by parsing information on whether to apply a merge mode. For example, an image encoding apparatus 100 may transmit merge mode application information in the unit of a CTU or a CU. In this case, information on whether to apply a merge mode may be transmitted to an image decoding apparatus 200 by using a 1-bit flag.

When whether to apply a merge mode is determined according to the size of a specific block, the shape of a specific block, whether a specific condition is satisfied, etc., information on whether to apply a merge mode may be signaled only when a corresponding condition is satisfied. In this case, information on whether to apply a merge mode may be transmitted to an image decoding apparatus 200 by using a 1-bit flag. Here, a specific block may be a current block or a neighboring block, and the present disclosure is not limited thereto. For example, when the height of a specific block is at least four times the width of a specific block, a merge mode may not be applied. In this case, signaling of information on whether to apply a merge mode may be omitted. In addition, whether to apply a merge mode may be implicitly inferred when a specific condition is satisfied.

Whether to signal information on whether to apply a merge mode in a coding unit may be adaptively determined according to information on whether to apply a merge mode signaled in a HLS. For example, when information on whether to apply a merge mode signaled in a SPS is false (i.e., a merge mode is not applied in the unit of a SPS), a merge mode may not be applied in a coding unit, and accordingly, information on whether to apply a merge mode may not be signaled.

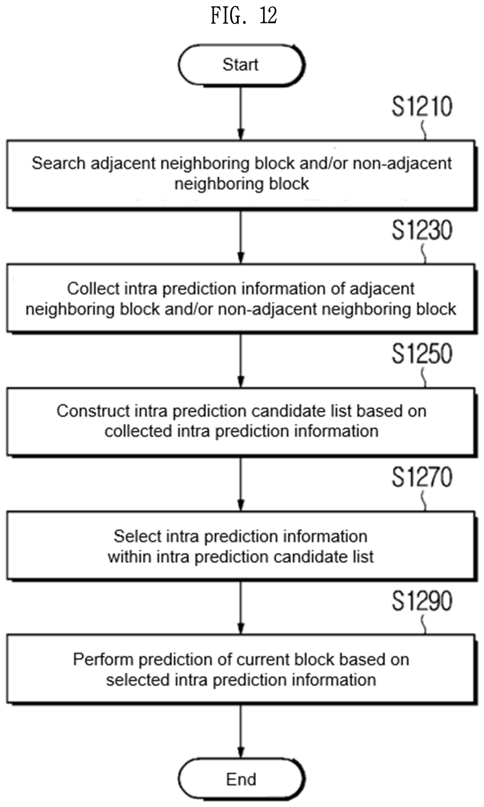

FIG. 12 is a flowchart representing a method for applying a merge mode according to the present disclosure. Referring to FIG. 12, an image encoding apparatus 100 and/or an image decoding apparatus 200 may search an adjacent neighboring block and/or a non-adjacent neighboring block S1210. Here, an adjacent neighboring block and a non-adjacent neighboring block may be blocks illustrated in FIG. 11. An image encoding apparatus 100 and/or an image decoding apparatus 200 may collect the intra prediction information of an adjacent neighboring block and/or a non-adjacent neighboring block S1230. An image encoding apparatus 100 and/or an image decoding apparatus 200 may construct an intra prediction candidate list based on collected intra prediction information S1250. An image encoding apparatus 100 and/or an image decoding apparatus 200 may select intra prediction information within an intra prediction candidate list S1270. An image encoding apparatus 100 and/or an image decoding apparatus 200 may perform current block prediction based on selected intra prediction information S1290. In other words, an image encoding apparatus 100 and/or an image decoding apparatus 200 may generate the prediction block of a current block by applying selected intra prediction information to a current block.

## Embodiment 2

The present disclosure proposes a merge mode that utilizes the general intra prediction information of a neighboring block and a co-located luma block for a current block during the intra prediction of a chroma block. In other words, the present disclosure proposes a merge mode that utilizes various intra prediction information of a chroma neighboring block and a corresponding luma block during the intra prediction of a chroma block.

Conventionally, all intra prediction information of a neighboring block is not considered during the intra prediction of a current chroma block, but only the conventional intra prediction information is considered. Accordingly, an existing method may be inefficient in terms of intra prediction mode selection and encoding information compression of a current chroma block.

The present disclosure proposes a method for performing intra prediction by utilizing the intra prediction information of the chroma neighboring block of a current chroma block and a corresponding luma block. In other words, an intra prediction candidate list may be constructed based on the intra prediction information of the neighboring block of a current chroma block and the intra prediction information of a corresponding luma block. An image encoding apparatus 100 and/or an image decoding apparatus 200 may select one candidate intra prediction information among the candidate intra prediction information included in the constructed intra prediction candidate list and apply it to a current block.

In order to construct an intra prediction candidate list, the present disclosure may collect intra prediction information after searching the neighboring block of a current chroma block to be encoded and/or decoded and a corresponding luma block. The intra prediction information of the neighboring block of a current chroma block may include the following prediction information.

- Intra prediction directional mode information
- Extended planar information
- Interpolation filter information
- DIMD information
- TIMD information
- Intra chroma prediction fusion information
- CCLM information
- MMLM information
- LM parameter signaling information
- CCCM information
- GLM information
- GL-CCCM information
- Reference sample characteristic information

Here, specific mode information may include information representing whether a specific mode is applied. For example, CCLM information may include information representing whether CCLM is applied. As another example, TIMD information may include information representing whether TIMD is applied. In other words, intra prediction information may include the intra prediction coding status information of an encoded and/or decoded neighboring block and a corresponding luma block. More specifically, "information" described above may include various information such as mode information, a mode index, a reference sample index, a reference sample characteristic, template matching information, mode merging, a weight, a model parameter, filter information, etc.

A method for collecting the intra prediction information of the neighboring block of a current chroma block and a corresponding luma block according to the present disclosure is not limited to the above-described method, and when a new intra prediction mode is proposed, intra prediction information may also be collected through the same method in a corresponding intra prediction mode.

The present disclosure may select the neighboring blocks (1020, 1030, 1040, 1050, 1060) of FIG. 10 to search the neighboring block of a current chroma block. Accordingly, the present disclosure may search corresponding neighboring blocks (1020, 1030, 1040, 1050, 1060). In other words, the intra prediction information of neighboring blocks (1020, 1030, 1040, 1050, 1060) may be collected. In this case, the present disclosure may search neighboring blocks in the following search order.

- Left neighboring block 1020 -> Top neighboring block 1030 -> Bottom-left neighboring block 1040 -> Top-right neighboring block 1050 -> Top-left neighboring block 1060

- Left neighboring block 1020 -> Top neighboring block 1030 -> Top-right neighboring block 1050 -> Bottom-left neighboring block 1040 -> Top-left neighboring block 1060
- Top neighboring block 1030 -> Left neighboring block 1020 -> Top-right neighboring block 1050 -> Bottom-left neighboring block 1040 -> Top-left neighboring block 1060

The search order of neighboring blocks according to the present disclosure is not limited to the above-described order, and the present disclosure may search a neighboring block in various orders.

The neighboring block search position of a current chroma block may be applied as described in FIG. 11 above. In other words, the present disclosure may collect intra prediction information by searching a non-adjacent neighboring block 1130 in addition to searching a neighboring block 1120 adjacent to a current block 1110. Referring to FIG. 11, the present disclosure may collect the intra prediction information of a neighboring block 1130 not adjacent to a current chroma block after collecting the intra prediction information of a neighboring block 1120 adjacent to a current chroma block. In addition, according to an embodiment of the present disclosure, the number of neighboring blocks illustrated in FIG. 11 may represent the search order of neighboring blocks. However, the present disclosure is not limited thereto, and a neighboring block may be searched in various orders.

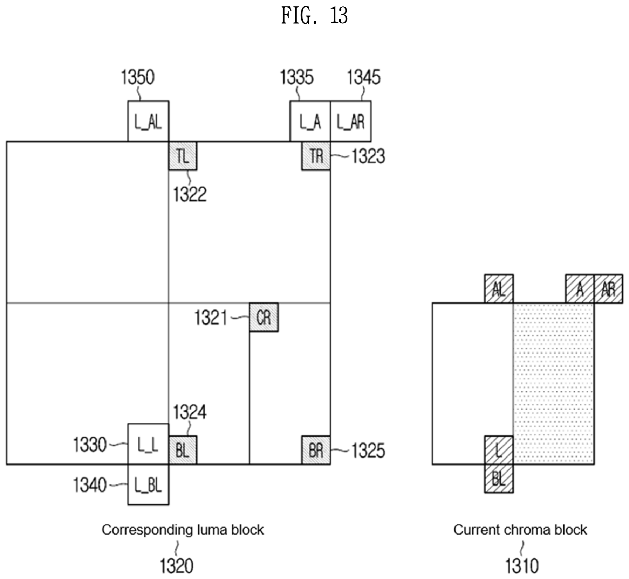

FIG. 13 is a diagram illustrating the search position of a corresponding luma block according to an embodiment of the present disclosure. The present disclosure may search a corresponding luma block 1320 corresponding to a current chroma block 1310. Specifically, an image encoding apparatus 100 and/or an image decoding apparatus 200 may collect intra prediction information at a corresponding position after searching specific positions (1321, 1322, 1323, 1324, 1325) within a corresponding luma block. In addition, an image encoding apparatus 100 and/or an image decoding apparatus 200 may also collect the intra prediction information of a corresponding block after searching the neighboring blocks of a corresponding luma block (1330, 1335, 1340, 1345, 1350).

The search order of specific positions (1321, 1322, 1323, 1324, 1325) within a corresponding luma block may be in the order of 1321, 1322, 1323, 1324 and 1325, but the search order of specific positions within a corresponding luma block according to the present disclosure is not limited thereto, and may vary. In addition, the search order of the neighboring blocks of a corresponding luma block (1330, 1335, 1340, 1345, 1350) may be 1330, 1335, 1340, 1345 and 1350 in enumerated order, but the neighboring block search order of a corresponding luma block according to the present disclosure is not limited thereto, and may vary. When an intra prediction mode included in the intra prediction information of a searched block is a mode that may not be applied to a chroma block, the collection of the intra prediction information of a corresponding block may be omitted.

According to an embodiment of the present disclosure, after comparing the reference sample characteristics of a current block with the reference sample characteristics of a neighboring block and a corresponding luma block, the intra prediction information of a corresponding block may be collected only when a specific condition is satisfied. In this case, a comparison between reference samples may be performed based on one of template matching, bilateral matching, SATD comparison between reference samples or correlation comparison between reference samples. In other words, a neighboring block and/or a corresponding luma block configuring an intra prediction candidate list may be determined based on a comparison between the reference sample of a current block and the reference sample of a neighboring block and/or a corresponding luma block.

In addition, according to an embodiment of the present disclosure, an intra prediction index representing candidate intra prediction information within an intra prediction candidate list may be determined based on one of template matching, bilateral matching, SATD comparison between reference samples or correlation comparison between reference samples.

The search position and/or search order of adjacent neighboring blocks, non-adjacent neighboring blocks and/or corresponding luma blocks proposed in the present disclosure are not limited to the above-described example, and more diverse search positions, the number of search positions and/or search order may be included.

When intra prediction information is collected from an adjacent neighboring block, a non-adjacent neighboring block and/or a corresponding luma block according to the present disclosure, N intra prediction information to be applied to a current block may be collected on a first-come-first-served basis from neighboring blocks and/or corresponding luma blocks. In other words, after searching neighboring blocks and/or a corresponding luma block based on predetermined order, N intra prediction information may be collected from a neighboring block and/or a corresponding luma block. When all of the N intra prediction information is collected, the search of a neighboring block and/or a corresponding luma block may be terminated. In this case, N may be a variety of natural numbers such as 3, 6, etc.

When N intra prediction information is collected on a first-come-first-served basis according to the present disclosure, a neighboring block and/or a corresponding luma block having the same intra prediction information may be excluded from an intra prediction candidate list by performing a pruning check through the following methods.

- Method 7. Perform a pruning check by checking both whether an intra prediction mode is applied and additional information used to apply an intra prediction mode
- Method 8. Perform a pruning check by checking only whether an intra prediction mode is applied
- Method 9. Not perform a pruning check

In other words, after searching a neighboring block and/or a corresponding luma block in predetermined order, the intra prediction information of a neighboring block and/or a corresponding luma block having the same intra prediction information may be excluded from an intra prediction candidate list. For example, when a pruning check is performed by checking only whether an intra prediction mode is applied as in Method 8, corresponding intra prediction information may be excluded from an intra prediction candidate list through a pruning check even when additional information used to apply a corresponding intra prediction mode (hereinafter referred to as 'intra prediction additional information') is different. In other words, when the first intra prediction information and the second intra prediction information are included in an intra prediction candidate list and intra prediction modes included in the first intra prediction information and the second intra prediction information are the same, intra prediction information added later (or, intra prediction information added first) may be excluded from an intra prediction candidate list even when intra prediction additional information included in the first intra prediction information and the second intra prediction information are different.

Alternatively, decoding complexity in an image decoding apparatus 200 may be reduced by not performing a pruning check as in Method 9. Alternatively, encoding complexity in an image encoding apparatus 100 may be reduced by not performing a pruning check as in Method 9.

When an intra prediction candidate list is not filled with pre-configured N intra prediction information even after searching an adjacent neighboring block and/or a non-adjacent neighboring block and/or a corresponding luma block, an intra prediction candidate list may be filled with pre-configured default modes. In this case, default modes may be configured according to the number of intra prediction information of a pre-determined intra prediction candidate list. In other words, when N intra prediction information is filled in an intra prediction candidate list, N default modes may be configured. The present disclosure is not limited thereto, and M default modes may be configured regardless of the number of intra prediction information of an intra prediction candidate list.

According to an embodiment of the present disclosure, when collecting N candidate intra prediction information, an image encoding apparatus 100 and/or an image decoding apparatus 200 may generate two intra prediction candidate lists by separating a linear model (LM, MMLM, CCCM, GLM, GL-CCCM, CCLM, etc.) and other modes (a conventional intra prediction mode). Alternatively, an image encoding apparatus 100 and/or an image decoding apparatus 200 may generate an intra prediction candidate list by selecting only a conventional intra prediction mode. Alternatively, an image encoding apparatus 100 and/or an image decoding apparatus 200 may generate an intra prediction candidate list by selecting only a linear model (LM, MMLM, CCCM, GLM, GL-CCCM, CCLM, etc.).

According to an embodiment of the present disclosure, after N candidate intra prediction information is generated, the order of candidate intra prediction information may be reordered through template matching, bilateral matching, etc. For example, after all of the N candidate intra prediction information is filled in an intra prediction candidate list, candidate intra prediction information may be reordered in order of template cost after performing template matching by using neighboring reference samples in a similar way to a TIMD method. In this case, the reordering of candidate intra prediction information within an intra prediction candidate list may be performed in ascending order of template cost.

The present disclosure may perform intra prediction by selecting one of the N candidate intra prediction information generated by the above-described method and applying selected candidate intra prediction information to a current block. In this case, intra prediction may be performed by using the following methods.

- Method 10. Apply only an intra prediction mode included in selected candidate intra prediction information to a current block Transmit intra prediction additional information to an image decoding apparatus 200
- Method 11. Apply both intra prediction additional information and an intra prediction mode included in selected candidate intra prediction information equally to a current block
- Method 12. Modify intra prediction additional information and an intra prediction mode included in selected candidate intra prediction information to suit a current block and apply them

According to an embodiment of the present disclosure, the number of candidate intra prediction information configuring an intra prediction candidate list, a neighboring block and/or corresponding luma block search position, the neighboring block and/or corresponding luma block search order, collected candidate intra prediction information, etc. may be variously determined according to the width of an input block, the height of an input block, the number of pixels of an input block, the position of a sub-block within an input block, an explicitly signaled syntax element, statistical characteristics of neighboring pixels, whether to use a secondary transform, etc. Here, an input block may be a current block.

According to an embodiment of the present disclosure, an intra prediction candidate index representing one candidate intra prediction information included in an intra prediction candidate list may be determined based on at least one of a prediction mode (e.g., an inter prediction mode, an intra prediction mode), the width of an input block, the height of an input block, the number of pixels of an input block, the position of a sub-block within an input block, an explicitly signaled syntax element, statistical characteristics of neighboring pixels and whether to use a secondary transform, etc.

According to the present disclosure, candidate intra prediction information may be binarized by using an appropriate binarization method and then transmitted to an image decoding apparatus 200. For example, as in intra luma mode transmission, an intra prediction candidate index may be configured as a MPM mode and the remaining intra prediction information may be binarized separately. In other words, the intra prediction information of a current block may be configured as a MPM mode and binarized, and the remaining intra prediction information may be binarized separately. The present disclosure may save binarization bits by performing appropriate context modeling when binarizing each intra prediction information. Alternatively, the present disclosure may transmit candidate intra prediction information to an image decoding apparatus 200 by using a binarization method such as truncated binary, truncated unary, fixed length, etc. considering the number of candidate intra prediction information included in an intra prediction candidate list.

Information representing whether a method proposed in the present disclosure (i.e., a merge mode) is applied (hereinafter referred to as 'information on whether to apply a merge mode') may be signaled through a high-level syntax (HLS). In other words, this information on whether to apply a merge mode may be signaled through a video parameter set (VPS), a sequence parameter set (SPS), a picture parameter set (PPS), a picture header, a slice header, DCI, etc. For example, in order to determine whether to apply a merge mode in the unit of a PPS, information on whether to apply a merge mode may be signaled through a PPS.

In addition, an image decoding apparatus 200 may adaptively determine whether to apply a merge mode without signaling information on whether to apply a merge mode. Alternatively, an image decoding apparatus 200 may determine whether to apply a merge mode by parsing information on whether to apply a merge mode. For example, an image encoding apparatus 100 may transmit merge mode application information in the unit of a CTU or a CU. In this case, information on whether to apply a merge mode may be transmitted to an image decoding apparatus 200 by using a 1-bit flag.

When whether to apply a merge mode is determined according to the size of a specific block, the shape of a specific block, whether a specific condition is satisfied, etc., information on whether to apply a merge mode may be signaled only when a corresponding condition is satisfied. In this case, information on whether to apply a merge mode may be transmitted to an image decoding apparatus 200 by using a 1-bit flag. Here, a specific block may be a current block, a neighboring block or a corresponding luma block, and the present disclosure is not limited thereto. For example, when the height of a specific block is at least four times the width of a specific block, a merge mode may not be applied. In this case, signaling of information on whether to apply a merge mode may be omitted. In addition, whether to apply a merge mode may be implicitly inferred when a specific condition is satisfied.

Whether to signal information on whether to apply a merge mode in a coding unit may be adaptively determined according to information on whether to apply a merge mode signaled in a HLS. For example, when information on whether to apply a merge mode signaled in a SPS is false (i.e., a merge mode is not applied in the unit of a SPS), a merge mode may not be applied in a coding unit, and accordingly, information on whether to apply a merge mode may not be signaled.

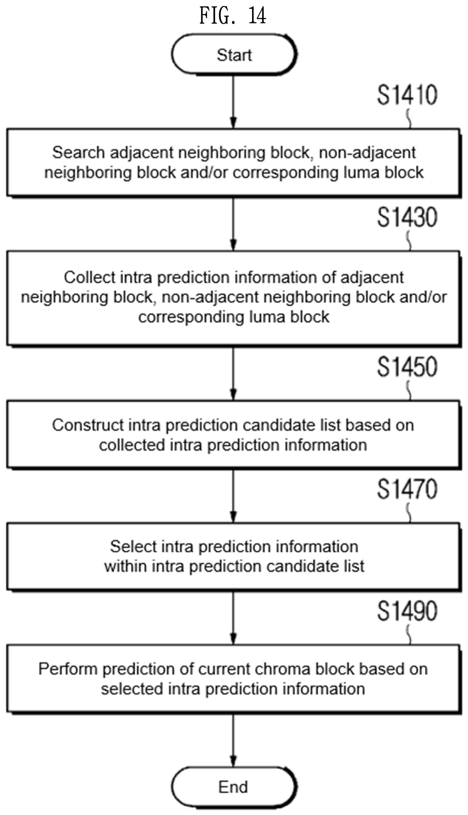

FIG. 14 is a flowchart representing a method for applying a merge mode according to the present disclosure. Referring to FIG. 14, an image encoding apparatus 100 and/or an image decoding apparatus 200 may search an adjacent neighboring block, a non-adjacent neighboring block and/or a corresponding luma block S1410. Here, an adjacent neighboring block and/or a non-adjacent neighboring block may be blocks illustrated in FIG. 11. In addition, a corresponding luma block may be a block 1320 illustrated in FIG. 13. An image encoding apparatus 100 and/or an image decoding apparatus 200 may collect the intra prediction information of an adjacent neighboring block, a non-adjacent neighboring block and/or a corresponding luma block S1430. An image encoding apparatus 100 and/or an image decoding apparatus 200 may construct an intra prediction candidate list based on collected intra prediction information S1450. An image encoding apparatus 100 and/or an image decoding apparatus 200 may select intra prediction information within an intra prediction candidate list S1470. An image encoding apparatus 100 and/or an image decoding apparatus 200 may perform current chroma block prediction based on selected intra prediction information S1490. In other words, an image encoding apparatus 100 and/or an image decoding apparatus 200 may generate the prediction block of a current chroma block by applying selected intra prediction information to a current chroma block.

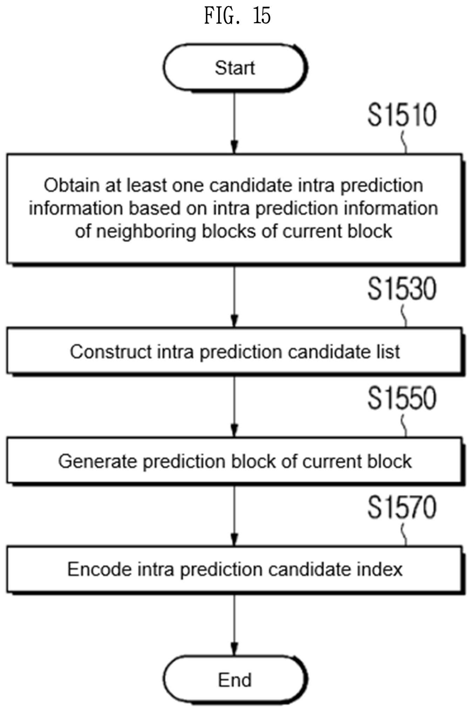

FIG. 15 is a flowchart of an encoding method according to an embodiment of the present disclosure. Referring to FIG. 15, an image encoding apparatus 100 may obtain at least one candidate intra prediction information based on the intra prediction information of neighboring blocks of a current block S1510. Here, candidate intra prediction information may include at least one of template based intra mode derivation (TIMD) information, decoder side intra mode derivation (DIMD) information or linear model information, linear interpolation intra prediction (LIP) information, position dependent intra prediction (PDPC) information, multi reference line (MRL) information, template-based multiple reference line (TMRL) information, intra sub-partition (ISP) information, matrix-based intra prediction (MIP) information, interpolation filter information, mode dependent intra smoothing (MDIS) information, combined inter and intra prediction (CIIP) information, spatial geometric partition mode \(SGPM) information, template matching intra prediction (intraTMP) information, intra prediction directional mode information, extended planar information, intra prediction fusion information, neighboring reference sample characteristic information or intra block copy (IBC) information.

An image encoding apparatus 100 may construct an intra prediction candidate list S1530. Specifically, an image encoding apparatus 100 may construct an intra prediction candidate list based on at least one candidate intra prediction information. According to an embodiment of the present disclosure, when a current block is a chroma block, an intra prediction candidate list may be constructed based on the first candidate intra prediction information of the neighboring block of a chroma block and the second candidate intra prediction information of a luma block corresponding to a chroma block. In other words, when a current block is a chroma block, an intra prediction candidate list may be constructed based on the intra prediction information of the neighboring block of a current block (i.e., the first candidate intra prediction information) and the intra prediction information of a corresponding luma block (i.e., the second candidate intra prediction information).

In addition, based on linear model information being included in the second candidate intra prediction information, an intra prediction candidate list may include at least one of the first intra prediction candidate list composed of linear model information or the second intra prediction candidate list composed of information other than linear model information. In other words, when a current block is a chroma block, an image encoding apparatus 100 may construct two intra prediction candidate lists (i.e., the first intra prediction candidate list, the second intra prediction candidate list) by separating linear model information and other information. Alternatively, when a current block is a chroma block, an image encoding apparatus 100 may construct an intra prediction candidate list (i.e., the second intra prediction candidate list) by using only linear model information. Alternatively, when a current block is a chroma block, an image encoding apparatus 100 may construct an intra prediction candidate list (i.e., the first intra prediction candidate list) by using only information other than linear model information.

An image encoding apparatus 100 may generate the prediction block of a current block S1550. Specifically, an image encoding apparatus 100 may generate the prediction block of a current block based on one candidate intra prediction information included in an intra prediction candidate list.

An image encoding apparatus 100 may encode an intra prediction candidate index S1570. Here, an intra prediction candidate index may be information representing one candidate intra prediction information included in an intra prediction candidate list.

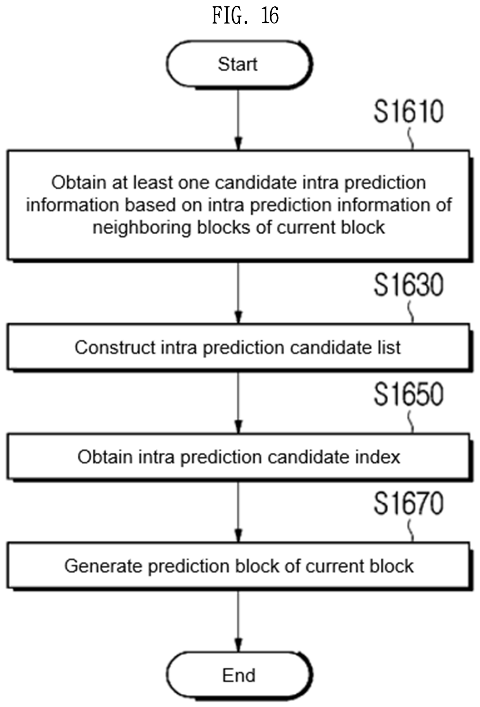

FIG. 16 is a flowchart of a decoding method according to an embodiment of the present disclosure. Referring to FIG. 16, an image decoding apparatus 200 may obtain at least one candidate intra prediction information based on the intra prediction information of neighboring blocks of a current block S1610. Here, candidate intra prediction information may include at least one of template based intra mode derivation (TIMD) information, decoder side intra mode derivation (DIMD) information or linear model information, linear interpolation intra prediction (LIP) information, position dependent intra prediction (PDPC) information, multi reference line (MRL) information, template-based multiple reference line (TMRL) information, intra sub-partition (ISP) information, matrix-based intra prediction (MIP) information, interpolation filter information, mode dependent intra smoothing (MDIS) information, combined inter and intra prediction (CIIP) information, spatial geometric partition mode (SGPM) information, template matching intra prediction (intraTMP) information, intra prediction directional mode information, extended planar information, intra prediction fusion information, neighboring reference sample characteristic information or intra block copy (IBC) information.

An image decoding apparatus 200 may construct an intra prediction candidate list S1630. Specifically, an image decoding apparatus 200 may construct an intra prediction candidate list based on at least one candidate intra prediction information. According to an embodiment of the present disclosure, when a current block is a chroma block, an intra prediction candidate list may be constructed based on the first candidate intra prediction information of the neighboring block of a chroma block and the second candidate intra prediction information of a luma block corresponding to a chroma block. In other words, when a current block is a chroma block, an intra prediction candidate list may be constructed based on the intra prediction information of the neighboring block of a current block (i.e., the first candidate intra prediction information) and the intra prediction information of a corresponding luma block (i.e., the second candidate intra prediction information).

In addition, based on linear model information being included in the second candidate intra prediction information, an intra prediction candidate list may include at least one of the first intra prediction candidate list composed of linear model information or the second intra prediction candidate list composed of information other than linear model information. In other words, when a current block is a chroma block, an image decoding apparatus 200 may construct two intra prediction candidate lists (i.e., the first intra prediction candidate list, the second intra prediction candidate list) by separating linear model information and other information. Alternatively, when a current block is a chroma block, an image decoding apparatus 200 may construct an intra prediction candidate list (i.e., the second intra prediction candidate list) by using only linear model information. Alternatively, when a current block is a chroma block, an image decoding apparatus 200 may construct an intra prediction candidate list (i.e., the first intra prediction candidate list) by using only information other than linear model information.

An image decoding apparatus 200 may obtain an intra prediction candidate index S1650. Here, an intra prediction candidate index may be information representing one candidate intra prediction information included in an intra prediction candidate list.

An image decoding apparatus 200 may generate the prediction block of a current block S 1670. Specifically, an image decoding apparatus 200 may generate the prediction block of a current block by performing intra prediction based on candidate intra prediction information indicated by an intra prediction candidate index.

Although the exemplary methods of the present disclosure are expressed as a series of operations for clarity of description, this is not intended to limit the order in which steps are performed, and if necessary, each step may be performed simultaneously or in different order. In order to implement a method according to the present disclosure, another step may be additionally included in an exemplary step or the remaining steps may be included excluding some steps or another additional step may be included excluding some steps.

In the present disclosure, an image encoding apparatus or an image decoding apparatus performing a predetermined operation (step) may perform an operation (a step) for checking a condition or a situation for performing a corresponding operation (step). For example, when it is stated that a predetermined operation is performed when a predetermined condition is satisfied, an image encoding apparatus or an image decoding apparatus may perform an operation for checking whether the predetermined condition is satisfied, and then perform the predetermined operation.

The various embodiments of the present disclosure do not list all possible combinations, but are intended to describe the representative aspect of the present disclosure, and matters described in various embodiments may be applied independently or in a combination of at least two.

In addition, the various embodiments of the present disclosure may be implemented by hardware, firmware, software or a combination thereof. For implementation by hardware, they may be implemented by one or more ASICs (Application Specific Integrated Circuits), DSPs (Digital Signal Processors), DSPDs (Digital Signal Processing Devices), PLDs (Programmable Logic Devices), FPGAs (Field Programmable Gate Arrays), general processors, controllers, microcontrollers, microprocessors, etc.

In addition, an image decoding device and an image encoding device to which an embodiment of the present disclosure is applied may be included in a multimedia broadcasting transmitting and receiving device, a mobile communication terminal, a home cinema video device, a digital cinema video device, a surveillance camera, a video communication device, a real-time communication device such as a video communication, a mobile streaming device, a storage medium, a camcorder, a video-on-demand (VoD) service providing device, an OTT video (Over the above video) device, an Internet streaming service providing device, a three-dimensional (3D) video device, a video phone video device, a medical video device, etc., and may be used to process a video signal or a data signal. For example, an OTT video (Over the above video) device may include a game console, a Blu-ray player, an Internet-connected TV, a home theater system, a smartphone, a tablet PC, a digital video recorder (DVR), etc.

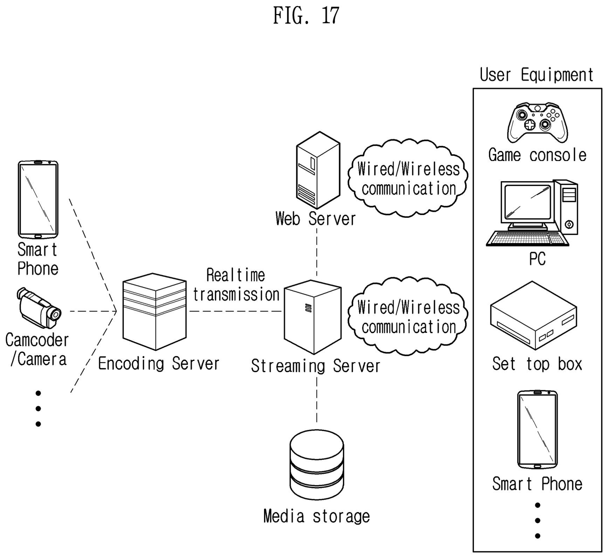

FIG. 17 shows an exemplary diagram of a content streaming system to which an embodiment of the present disclosure may be applied.

As shown in FIG. 17, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the image encoding method and/or the image encoding apparatus to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

[Industrial Applicability]

The embodiments of the present disclosure may be used for encoding/decoding an image.

**Claims**

1. An image decoding method performed by an image decoding apparatus, comprising:

   obtaining one or more candidate intra prediction information based on intra prediction information of neighboring blocks of a current block;
   constructing an intra prediction candidate list based on the one or more candidate intra prediction information;
   obtaining an intra prediction candidate index representing one candidate intra prediction information included in the intra prediction candidate list; and
   generating a prediction block of the current block by performing intra prediction based on the candidate intra prediction information indicated by the intra prediction candidate index,
   wherein the candidate intra prediction information includes at least one of template based intra mode derivation (TIMD) information, decoder side intra mode derivation (DIMD) information or linear model information, linear interpolation intra prediction (LIP) information, position dependent intra prediction (PDPC) information, multi reference line (MRL) information, template-based multiple reference line (TMRL) information, intra sub-partition (ISP) information, matrix-based intra prediction (MIP) information, interpolation filter information, mode dependent intra smoothing (MDIS) information, combined inter and intra prediction (CIIP) information, spatial geometric partition mode (SGPM) information, template matching intra prediction (intraTMP) information, intra prediction directional mode information, extended planar information, intra prediction fusion information, neighboring reference sample characteristic information or intra block copy (IBC) information.

2. The method of claim 1, wherein the neighboring blocks are determined based on one of template matching, bi-lateral matching or a sum of absolute transformed differences (SATD).

3. The method of claim 1, wherein the intra prediction candidate index is determined based on one of template matching, bi-lateral matching or a sum of absolute transformed differences (SATD).

4. The method of claim 1, wherein an order of the candidate intra prediction information included in the intra prediction candidate list is re-ordered based on one of template matching or bi-lateral matching.

5. The method of claim 1, wherein the candidate intra prediction information includes information on whether a corresponding candidate intra prediction mode is applied.

6. The method of claim 5, wherein the candidate intra prediction information further includes additional information used to apply the corresponding candidate intra prediction mode.

7. The method of claim 6, wherein the prediction block is generated based on at least one of the corresponding candidate intra prediction mode or the additional information.

8. The method of claim 1, wherein a number of the candidate intra prediction information included in the intra prediction candidate list is determined based on at least one of a size of the current block, a position of a sub-block within the current block, a statistical characteristic of the neighboring blocks or whether a secondary transform is used for the current block.

9. The method of claim 1, wherein an order of obtaining the neighboring blocks is determined based on at least one of a size of the current block, a position of a sub-block within the current block, a statistical characteristic of the neighboring blocks or whether a secondary transform is used for the current block.

10. The method of claim 1, wherein positions of the neighboring blocks are determined based on at least one of a size of the current block, a position of a sub-block within the current block, a statistical characteristic of the neighboring blocks or whether a secondary transform is used for the current block.

11. The method of claim 1, wherein based on the current block being a chroma block, the intra prediction candidate list is constructed based on first candidate intra prediction information of a neighboring block of the chroma block and second candidate intra prediction information of a luma block corresponding to the chroma block.

12. The method of claim 11, wherein based on the linear model information being included in the second candidate intra prediction information, the intra prediction candidate list includes at least one of a first intra prediction candidate list composed of the linear model information or a second intra prediction candidate list composed of information other than the linear model information.

13. An image encoding method performed by an image encoding apparatus, comprising:

obtaining one or more candidate intra prediction information based on intra prediction information of neighboring blocks of a current block;
constructing an intra prediction candidate list based on the one or more candidate intra prediction information;
generating a prediction block of the current block based on one candidate intra prediction information included in the intra prediction candidate list; and
encoding an intra prediction candidate index representing the one candidate intra prediction information,
wherein the candidate intra prediction information includes at least one of template based intra mode derivation (TIMD) information, decoder side intra mode derivation (DIMD) information or linear model information, linear interpolation intra prediction (LIP) information, position dependent intra prediction (PDPC) information, multi reference line (MRL) information, template-based multiple reference line (TMRL) information, intra sub-partition (ISP) information, matrix-based intra prediction (MIP) information, interpolation filter information, mode dependent intra smoothing (MDIS) information, combined inter and intra prediction (CIIP) information, spatial geometric partition mode (SGPM) information, template matching intra prediction (intraTMP) information, intra prediction directional mode information, extended planar information, intra prediction fusion information, neighboring reference sample characteristic information or intra block copy (IBC) information.

14. A computer-readable recording medium storing a bitstream generated by the image encoding method of claim 13.

15. A method for transmitting a bitstream generated by an image encoding method, the image encoding method comprising:

obtaining one or more candidate intra prediction information based on intra prediction information of neighboring blocks of a current block;
constructing an intra prediction candidate list based on the one or more candidate intra prediction information;
generating a prediction block of the current block based on one candidate intra prediction information included in the intra prediction candidate list; and
encoding an intra prediction candidate index representing the one candidate intra prediction information,
wherein the candidate intra prediction information includes at least one of template based intra mode derivation (TIMD) information, decoder side intra mode derivation (DIMD) information or linear model information, linear interpolation intra prediction (LIP) information, position dependent intra prediction (PDPC) information, multi reference line (MRL) information, template-based multiple reference line (TMRL) information, intra sub-partition (ISP) information, matrix-based intra prediction (MIP) information, interpolation filter information, mode dependent intra smoothing (MDIS) information, combined inter and intra prediction (CIIP) information, spatial geometric partition mode (SGPM) information, template matching intra prediction (intraTMP) information, intra prediction directional mode information, extended planar information, intra prediction fusion information, neighboring reference sample characteristic information or intra block copy (IBC) information.

FIG.1

FIG.2

IMAGE ENCODING APPARATUS — 100

INPUT IMAGE → IMAGE PARTITIONER (110)

TRANSFORMER (120) → QUANTIZER (130) → ENTROPY ENCODER (190) → BITSTREAM

DEQUANTIZER (140) → INVERSE TRANSFORMER (150)

INTER PREDICTOR (180)

INTRA PREDICTOR (185)

DPB / MEMORY (170)

FILTER (160)

115

155

FIG.3

# FIG.4

```
                    ┌─────────┐
                    │  START  │
                    └────┬────┘
                         │
                         ▼
   ┌──────────────────────────────────────────────┐
   │ PERFORM PREDICTION (DETERMINE INTRA PREDICTION │
   │  MODE/TYPE, DERIVE NEIGHBORING REFERENCE SAMPLES,│ ～ S410
   │        GENERATE PREDICTION SAMPLES)            │
   └──────────────────────┬───────────────────────┘
                          │
                          ▼
   ┌──────────────────────────────────────────────┐
   │    RESIDUAL PROCESS (DERIVE RESIDUAL SAMPLES    │ ～ S420
   │         BASED ON PREDICTION SAMPLES)           │
   └──────────────────────┬───────────────────────┘
                          │
                          ▼
   ┌──────────────────────────────────────────────┐
   │    ENCODE IMAGE/VIDEO INFORMATION INCLUDING     │ ～ S430
   │  PREDICTION INFORMATION AND RESIDUAL INFORMATION│
   └──────────────────────┬───────────────────────┘
                          │
                          ▼
                    ┌─────────┐
                    │   END   │
                    └─────────┘
```

# FIG. 5

```
                                        185
                                         │
                              ┌──────────┴────────────┐
                              │          186          │
                              │          │            │
   ORIGINAL PICTURE           │  ┌───────────────────┐│       INTRA PREDICTION
   ──────────────────────────►│  │  INTRA PREDICTION  ││──────►MODE/TYPE INFORMATION
                              │  │ MODE/TYPE DETERMINER││
                              │  └───────────────────┘│
                              │          187          │
                              │          │            │
                              │  ┌───────────────────┐│
                              │  │ REFERENCE SAMPLE   ││
                              │  │     DERIVER        ││
                              │  └───────────────────┘│
   RECONSTRUCTED REFERENCE    │          188          │       PREDICTION SAMPLE(S)
   ──────────────────────────►│          │            │──────►
   AREA IN CURRENT PICTURE    │  ┌───────────────────┐│
                              │  │ PREDICTION SAMPLE  ││
                              │  │     DERIVER        ││
                              │  └───────────────────┘│
                              └───────────────────────┘
                                  INTRA PREDICTOR
```

## FIG. 6

START

DETERMINE INTRA PREDICTION MODE/TYPE FOR CURRENT BLOCK BASED ON RECEIVED PREDICTION INFORMATION — S610

DERIVE NEIGHBORING REFERENCE SAMPLES — S620

PERFORM PREDICTION (GENERATE PREDICTION SAMPLES) — S630

DERIVE RESIDUAL SAMPLES BASED ON RESIDUAL INFORMATION — S640

GENERATE RECONSTRUCTED BLOCK/PICTURE BASED ON PREDICTION SAMPLES AND RESIDUAL SAMPLES — S650

END

## FIG. 7

265

266

INTRA PREDICTION MODE/TYPE INFORMATION →

INTRA PREDICTION MODE/TYPE DETERMINER

267

REFERENCE SAMPLE DERIVER

→ PREDICTION SAMPLE

RECONSTRUCTED REFERENCE AREA IN CURRENT PICTURE →

268

PREDICTION SAMPLE DERIVER

INTRA PREDICTOR

FIG. 8

FIG. 9

FIG. 10

FIG. 11

1 ~ 5 : Adjacent neighboring block (1120)

6 ~ 23 : Non-adjacent neighboring block (1130)

FIG. 12

Start

S1210

Search adjacent neighboring block and/or non-adjacent neighboring block

S1230

Collect intra prediction information of adjacent neighboring block and/or non-adjacent neighboring block

S1250

Construct intra prediction candidate list based on collected intra prediction information

S1270

Select intra prediction information within intra prediction candidate list

S1290

Perform prediction of current block based on selected intra prediction information

End

FIG. 13

Corresponding luma block
1320

Current chroma block
1310

FIG. 14

```
         ( Start )
             │
             ▼                                      S1410
┌─────────────────────────────────────────┐
│  Search adjacent neighboring block, non-adjacent │
│  neighboring block and/or corresponding luma block │
└─────────────────────────────────────────┘
             │
             ▼                                      S1430
┌─────────────────────────────────────────┐
│   Collect intra prediction information of adjacent │
│  neighboring block, non-adjacent neighboring block and/or │
│           corresponding luma block        │
└─────────────────────────────────────────┘
             │
             ▼                                      S1450
┌─────────────────────────────────────────┐
│   Construct intra prediction candidate list based on │
│         collected intra prediction information   │
└─────────────────────────────────────────┘
             │
             ▼                                      S1470
┌─────────────────────────────────────────┐
│      Select intra prediction information  │
│        within intra prediction candidate list │
└─────────────────────────────────────────┘
             │
             ▼                                      S1490
┌─────────────────────────────────────────┐
│  Perform prediction of current chroma block based on │
│         selected intra prediction information  │
└─────────────────────────────────────────┘
             │
             ▼
          ( End )
```

FIG. 15

```
                    ┌──────────┐
                    │  Start   │
                    └────┬─────┘
                         │                    S1510
    ┌────────────────────▼──────────────────────┐
    │ Obtain at least one candidate intra        │
    │ prediction information based on intra       │
    │ prediction information of neighboring       │
    │ blocks of current block                     │
    └────────────────────┬──────────────────────┘
                         │                    S1530
    ┌────────────────────▼──────────────────────┐
    │ Construct intra prediction candidate list   │
    └────────────────────┬──────────────────────┘
                         │                    S1550
    ┌────────────────────▼──────────────────────┐
    │ Generate prediction block of current block  │
    └────────────────────┬──────────────────────┘
                         │                    S1570
    ┌────────────────────▼──────────────────────┐
    │ Encode intra prediction candidate index     │
    └────────────────────┬──────────────────────┘
                         │
                    ┌────▼─────┐
                    │   End    │
                    └──────────┘
```

EP 4 694 135 A2

FIG. 16

Start

S1610

Obtain at least one candidate intra prediction
information based on intra prediction information of
neighboring blocks of current block

S1630

Construct intra prediction candidate list

S1650

Obtain intra prediction candidate index

S1670

Generate prediction block of current block

End

41

FIG. 17